# EUROPEAN PATENT APPLICATION

(11) **EP 3 640 776 A1**
(43) Date of publication of application: **22.04.2020**
(21) Application number: 19195740.6
(22) Date of filing: 05.09.2019
(51) Int. Cl.: G06F 3/041, G06F 3/044

(54) **TOUCH DISPLAY SCREEN AND METHOD FOR MANUFACTURING THE SAME, TOUCH DISPLAY DEVICE**

(30) Priority: 16.10.2018 CN 201811204752
(71) Applicant: BOE TECHNOLOGY GROUP CO., LTD., Beijing 100015 (CN); Chongqing BOE Optoelectronics Technology Co., Ltd., Chongqing 400714 (CN)
(72) Inventor: Wu,, Zhongshan, Beijing, 100176 (CN); Bi,, Xin, Beijing, 100176 (CN); Guo,, Jiandong, Beijing, 100176 (CN); Pu,, Xun, Beijing, 100176 (CN); Wu,, Junhui, Beijing, 100176 (CN)
(74) Representative: Potter Clarkson

(57) **Abstract**

A touch display screen, a method for manufacturing the same, and a touch display device are provided. The touch display screen (01) includes a display panel (011), and a touch sensing pattern (012; 022) disposed on the display panel (011), wherein an orthographic projection of the touch sensing pattern (012; 022) on the display panel (011) covers a display region (Al) of the display panel (011) and extends into a non-display region (A2).

## Description

### TECHNICAL FIELD

The present invention relates to the field of touch display technologies, and in particular, to a touch display screen, a method for manufacturing the same, and a touch display device.

### BACKGROUND

The touch display device is widely used in a field of touch display. The touch display device of the related art has the following problems: when a finger or a stylus touches an edge region of the touch display region of the touch display screen, the number of touch units at the edge region is relatively small, and the number of capacitors, to which the touch integrated circuit IC can refer when determining a touch point, is also relatively small, resulting in a lower accuracy of determining the touch point. Therefore, the touch precision of the touch display screen is poor.

### SUMMARY

According to an aspect of the present disclosure, there is provided a touch display screen comprising: a display panel, and a touch sensing pattern disposed on the display panel, wherein an orthographic projection of the touch sensing pattern on the display panel covers a display region of the display panel and extends into a non-display region.

In an embodiment, the touch sensing pattern comprises a main touch sensing pattern and a secondary touch sensing pattern, and an orthographic projection of the main touch sensing pattern on the display panel is within the display region, and an orthographic projection of the secondary touch sensing pattern on the display panel is extended from the display region to the non-display region at least partially.

In an embodiment, the touch sensing pattern comprises a main touch sensing pattern and a secondary touch sensing pattern, and an orthographic projection of a line connecting vertices of a boundary of the main touch sensing pattern on the display panel coincides with a boundary of the display region, and the secondary touch sensing pattern surrounds the main touch sensing pattern.

In an embodiment, the touch sensing pattern comprises a plurality of touch units arranged in an array, and the plurality of touch units form a plurality of touch unit rows arranged in a first direction and a plurality of touch unit columns arranged in a second direction, wherein the secondary touch sensing pattern comprises two touch unit rows formed by the touch units at both ends of each touch unit column and the outermost touch unit columns of the plurality of touch unit columns.

In an embodiment, each touch unit has a periodic pattern, and the patterns on each touch unit column form a periodic pattern, and the patterns on each touch unit row form a periodic pattern.

In an embodiment, the secondary touch pattern of the touch display screen has a width ranging from 50 micrometers to 500 micrometers.

In an embodiment, the touch display screen further comprises: a plurality of touch sensing lines, and the plurality of touch sensing lines are connected to the plurality of touch units one by one on a first side of the plurality of touch units,
the secondary touch region has widths including a first width and a second width, the first width ranges from 50 micrometers to 500 micrometers, and the second width ranges from 50 micrometers to 300 micrometers; the first width is a maximum distance between the touch sensing lines located between the first side of the display region and the first side of the display panel, and a boundary line of the first side of the display region; and the second width is a maximum distance between the boundary line of the second side of the touch units located between the second side of the display region and the second side of the display panel, and a boundary line of the second side of the display region, wherein the first side of the display region, the first side of the display panel, and the first side of the plurality of touch units are a same side, and the second side of the display region and the second side of the display panel are a same side, the second side of the display region is any one of the sides of the display region other than the first side.

In an embodiment, the touch units are touch electrodes, and the touch sensing lines are touch electrode lines.

In an embodiment, the touch sensing pattern comprises a grid pattern.

In an embodiment, the grid pattern has a uniform density.

In an embodiment, the touch unit is in a shape of a fishbone, and adjacent touch units in the second direction are engaged with each other via the fishbone shape, so that the touch sensing pattern has a uniform density in general.

In an embodiment, the touch sensing line has a same grid pattern as that of the touch sensing pattern, and the touch sensing line and the touch sensing pattern together form a planar pattern with a uniform density.

In an embodiment, the secondary touch sensing pattern is formed by at least one wire.

In an embodiment, the secondary touch sensing pattern comprises a longitudinal secondary touch sensing pattern on a first side of the display panel and a longitudinal secondary touch sensing pattern on a second side of the display panel, as well as a lateral secondary touch sensing pattern on a third side of the display panel and a lateral secondary touch sensing pattern on a fourth side of the display panel, wherein the longitudinal secondary touch sensing pattern is formed by at least one wire extending in the second direction and adjacent wires in the first direction are electrically connected to each other to form a grid pattern, and wherein the lateral secondary touch sensing pattern is formed by a plurality of wires extending in the second direction.

According to another aspect of the present disclosure, there is provided touch display device, comprising the touch display screen mentioned above.

### BRIEF DESCRIPTION OF THE DRAWINGS

In order to more clearly illustrate the technical solutions in the embodiments of the present application, the drawings used in the description of the embodiments will be briefly described below. It is obvious that the drawings in the following description are only some of embodiments of the present application. Other drawings may also be obtained by those skilled in the art in light of the inventive work.
FIG. 1 is a front view of a touch display screen provided by the related art;
FIG. 2 is a cross-sectional view of the touch display screen shown in FIG. 1;
FIG. 3 is a schematic view of determining a touch point by the touch display screen shown in FIG. 1;
FIG. 4 is a front view of a touch display screen according to an embodiment of the present application;
FIG. 5 (a) and (b) are a cross-sectional view of a touch display screen according to an embodiment of the present application; in FIG. 5 (a) an orthographic projection of the boundary of the main touch sensing pattern on the display panel coincides with a boundary of the display region, and the secondary touch sensing pattern surrounds the main touch sensing pattern; in FIG. 5 (b), an orthographic projection of the secondary touch sensing pattern on the display panel is extended from the display region to the non-display region;
FIG. 6 is a front view of another touch display screen provided by an embodiment of the present application;
FIG. 7(a) and (b) are a front view of yet another touch display screen provided by an embodiment of the present application; in FIG. 7 (a), the secondary touch sensing pattern of the touch display screen is formed by those touch unit rows and touch unit columns on the periphery of the array of the touch units; in FIG. 7 (b), the secondary touch sensing pattern of the touch display screen is formed by a portion of touch unit rows and a portion of touch unit columns on the periphery of the array of the touch units;
FIG. 8 is a cross-sectional view of still another touch display screen provided by an embodiment of the present application;
FIG. 9 is a schematic view of determining a touch point by a touch display screen according to an embodiment of the present application;
FIG. 10 is a schematic view of capacitance values of respective positions in a touch display screen provided by the related art;
FIG. 11 is a schematic view of capacitance values of various positions in a touch display screen provided by an embodiment of the present application;
FIG. 12 is a flowchart of a method for manufacturing a touch display screen according to an embodiment of the present application;
FIG. 13 is a flowchart of a method for manufacturing another touch display screen according to an embodiment of the present application;
FIG. 14 is a cross-sectional view of a touch display device according to an embodiment of the present application; and
FIG. 15 is a touch sensing pattern of a touch display screen according to an embodiment of the present application, which pattern is a grid pattern and in which Figure those touch units engaged with each other via the fishbone shape are shown in detail.

The drawings herein are incorporated in and constitute a part of the specification, which illustrate embodiments consistent with the present application and which are used in conjunction with the specification to explain the principles of the application.

### DETAILED DESCRIPTION OF EMBODIMENTS

In order to make the purpose, technical solutions and advantages of the present application clearer, the present invention will be further described in detail with reference to the accompanying drawings. It is apparent that the described embodiments are only a part of the embodiments of the present application, and not all of them. Based on the embodiments of the present application, all other embodiments obtained by those skilled in the art without an inventive effort are within the scope of the present application.

At present, the implementation of touch products (such as touch screen display) mainly includes an In-Cell type, an On-Cell type and an add-on type. As touch products continue to develop in a tendency of being slimmer and lighter, narrower bezels, and a lower cost, the design requirements for On-Cell products are getting higher and higher.

On-Cell products may be divided into Multi Layer On Cell (referred to as: MLOC) products and Single Layer On Cell (referred to as: SLOC) products, MLOC products include Multi-layer metal touch sensing patterns which form a metal mesh structure, SLOC products include a single layer of Indium Tin Oxide (referred to as: ITO) touch sensing patterns. Compared with MLOC products, SLOC products have the advantages of a simple manufacturing process and a relatively low cost, which makes SLOC products more and more popular in the industry.

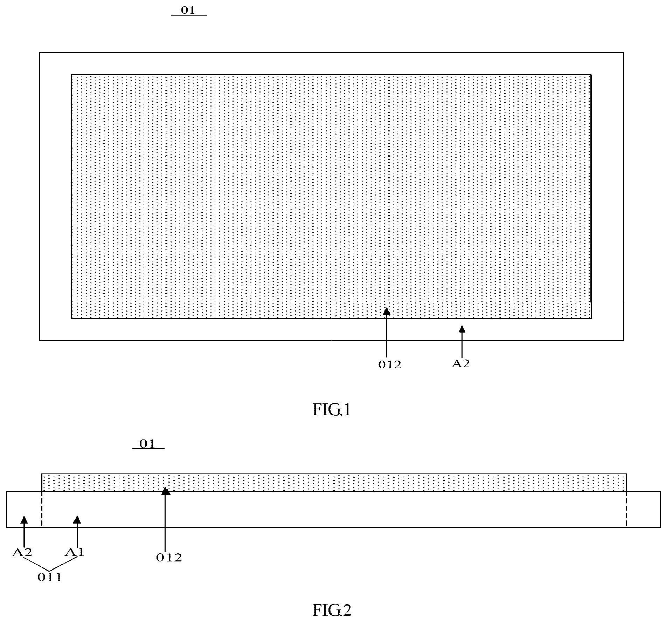

FIG.1 is a front view of a touch display screen 01 provided by the related art, and FIG. 2 is a cross-sectional view of the touch display screen 01 shown in FIG. 1. The touch display screen 01 may be a SLOC touch display. Referring to FIG. 1 and FIG. 2, the touch display screen 01 includes a display panel 011 and a touch sensing pattern 012 disposed on the display panel 011. The display panel 011 has a display region A1 and a non-display region A2 surrounding the display region A1. The orthographic projection of the touch sensing pattern 012 on the display panel 011 covers the display region A1, and the orthographic projection of a boundary of the touch sensing pattern 012 on the display panel 011 coincides with a boundary of the display region A1. The corresponding region of the display region A1 on the touch display screen 01 is the touch display region of the touch display screen 01. The touch sensing pattern includes a plurality of touch units. The touch display screen 01 further includes a touch IC connected to each touch unit. A capacitor is formed at a position where each touch unit is located, and the touch IC is used to acquire the capacitance value of the position where each touch unit is located, when a finger or a stylus touches the touch display screen 01, the capacitance value changes at the position where each touch unit in the sensing region is located, the sensing region is a touched region on the touch display screen which is contacted by the finger or the stylus and a region surrounding the touched region. The touch IC determines the touch point according to the change amount of all the capacitance values in the sensing region.

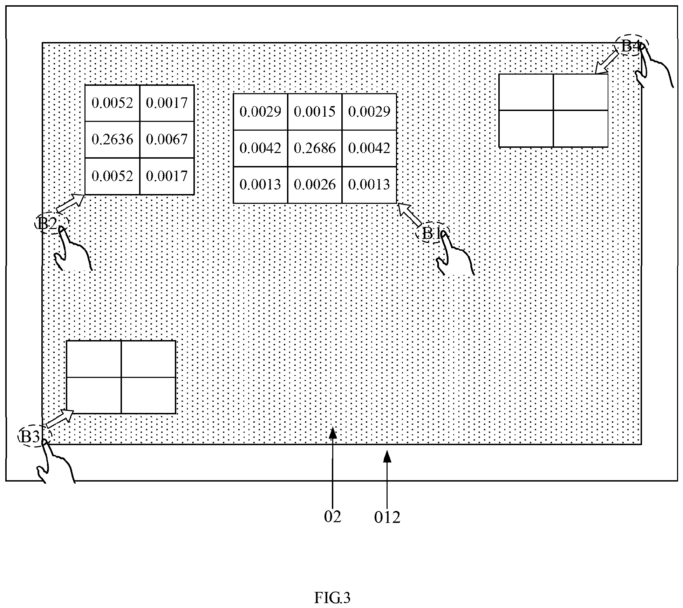

FIG.3 is a schematic view of determining a touch point of the touch display screen 01 shown in FIG. 1. Referring to FIG. 3, when the finger touches a position point B1 in a central region of the touch display region, the sensing region includes 9 touches units. The capacitance values of the position where the 9 touch units are located change, and the change amount of each capacitance value is shown in the table near B1 in FIG. 3, and the touch IC determines touch point according to the change amount of the 9 capacitance values in the sensing region. When the finger touches the position B2 at the edge of the touch display region, the sensing region includes 6 touch units, and the capacitance values of the positions where the 6 touch units are located change, and the change amount of each capacitance value is shown in the table near B2 in FIG. 3, and the touch IC determines touch point according to the change amount of the 6 capacitance values in the sensing region. When the finger touches the position B3 or B4 at the edge of the touch display region, the corresponding sensing region includes 4 touch units, and the capacitance values of the positions where the 4 touch units are located change, and the touch IC determines touch point according to the change amount of the 4 capacitance values in the sensing region.

As can be seen from FIG. 3, when the finger touches the edge of the touch display region, especially a corner, the number of touch units in the sensing region is relatively small, so that the number of capacitors, to which the touch integrated circuit IC can refer when determining a touch point, is also relatively small, which results in a relatively lower touch precision at the edge of the SLOC product. In addition, SLOC products only have a layer of touch sensing patterns, resulting in unstable touch performance at the edge of SLOC products, thereby adversely affecting the performance detection of SLOC products, thereby reducing production yield.

In comparison, in the touch display screen and the manufacturing method thereof and the touch display device provided by the embodiment of the present invention, the orthographic projection of the touch sensing pattern on the display panel is located in the display region and the non-display region of the display panel, so that there are touch units both in the touch display region and the non-touch display region. When the edge of the touch display region is touched, the sensing region may include touch units in the touch display region and touch units in the non-touch display region. Therefore, the number of touch units in the sensing region is relatively large, the number of capacitors that can be referenced to when determining the touch point is relatively large, the touch precision of the touch display screen is relatively high, and the stability of touch performance at the edge of the touch display screen is relatively high. Please refer to the following embodiments for detailed solutions provided by this application.

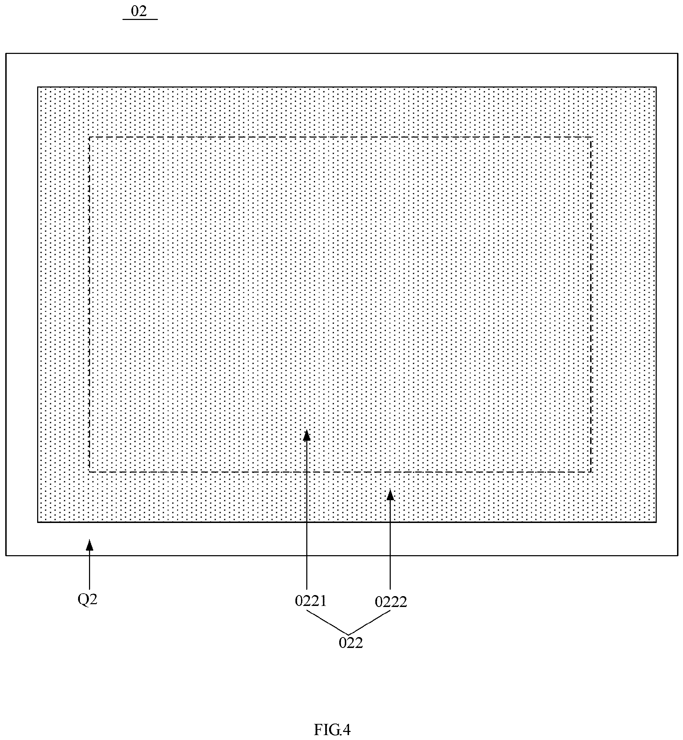

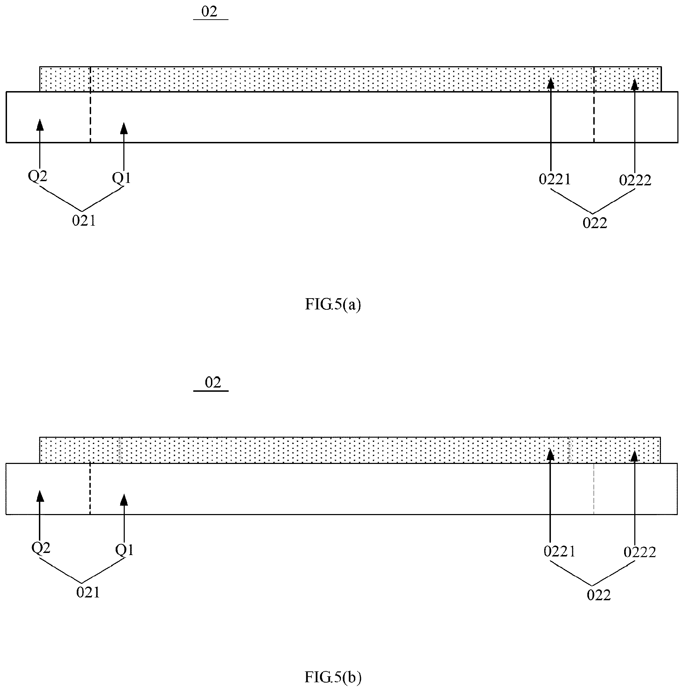

FIG. 4 is a front view of a touch display screen 02 according to an embodiment of the present application. FIG. 5(a) and (b) are a cross-sectional view of a touch display screen according to an embodiment of the present application; in FIG. 5 (a) an orthographic projection of the boundary of the main touch sensing pattern on the display panel coincides with a boundary of the display region and the secondary touch sensing pattern surrounds the main touch sensing pattern; in FIG. 5 (b) an orthographic projection of the secondary touch sensing pattern on the display panel is extended from the display region to the non-display region. Referring to FIG. 4 and FIG. 5(a), the touch display screen 02 includes a display panel 021 and a touch sensing pattern 022 disposed on the display panel 021. The orthographic projection of the touch sensing pattern 022 on the display panel 021 covers a display region Q1 of the display panel 021 and a non-display region Q2 at the periphery of the display region Q1.

In summary, in the touch display screen provided by the embodiments of the present application, since the orthographic projection of the touch sensing pattern on the display panel is located in the display region and the non-display region of the display panel, there are touch units both in the touch display region and in the non-touch display region of the touch display screen. When the edge of the touch display region is touched, the sensing region may contain touch units in the touch display region and touch units in the non-touch display region. Therefore, the number of touch units in the sensing region is relatively large, and the number of capacitors that can be referenced to when determining the touch point is also relatively large, thereby the touch precision of the touch display screen is relatively high.

Optionally, the display panel 021 has a display surface and a non-display surface which are arranged to be opposite to each other. The display surface and the non-display surface may each in a rectangular shape, and the non-display region Q2 surrounds the display region Q1. The shape of the display region Q1 may be a rectangle, and the shape of the non-display region Q2 may be a ring. The shapes of the inner circumference and the outer circumference of the non-display region Q2 may be both a rectangle.

Optionally, as shown in FIG. 4 and FIG. 5(a), the touch sensing pattern 022 includes a main touch sensing pattern 0221 and a secondary touch sensing pattern 0222. The orthographic projection of the main touch sensing pattern 0221 on the display panel 021 is located in the display region Q1 of the display panel 021, while the orthographic projection of the secondary touch sensing pattern 0222 on the display panel 021 is located in the non-display region 0222 of the display panel 021. Optionally, the secondary touch sensing pattern 0222 surrounds the main touch sensing pattern 0221. The orthographic projection of a boundary of the main touch sensing pattern 0221 on the display panel 021 coincides with a boundary of the display region Q1 of the display panel 021. Optionally, as shown in FIG. 5(b), the orthographic projection of the boundary of the main touch sensing pattern 0221 on the display panel 021 is within the boundary of the display region Q1 of the display panel 021 and the orthographic projection of the secondary touch sensing pattern 0222 on the display panel 021 is extended from the display region Q1 to the non-display region Q2 of the display panel 021.

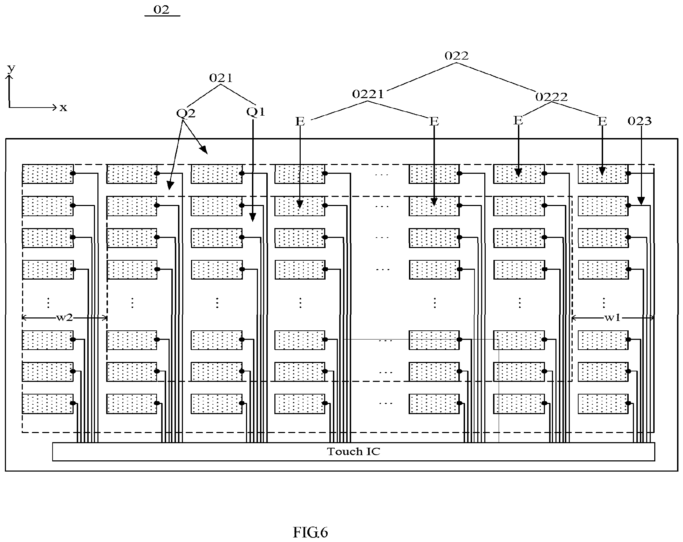

Optionally, please refer to FIG. 6, which shows a front view of another touch display screen 02 provided by the embodiment of the present application. The touch sensing pattern 022 is composed of a plurality of touch units E arranged in an array. The plurality of touch units E form a plurality of touch unit rows arranged in a first direction x and a plurality of touch unit columns arranged in a second direction y. The secondary touch sensing patterns 0222 are composed of the touch units E at both ends of each touch unit column and the outermost touch unit columns of the plurality of touch unit columns.

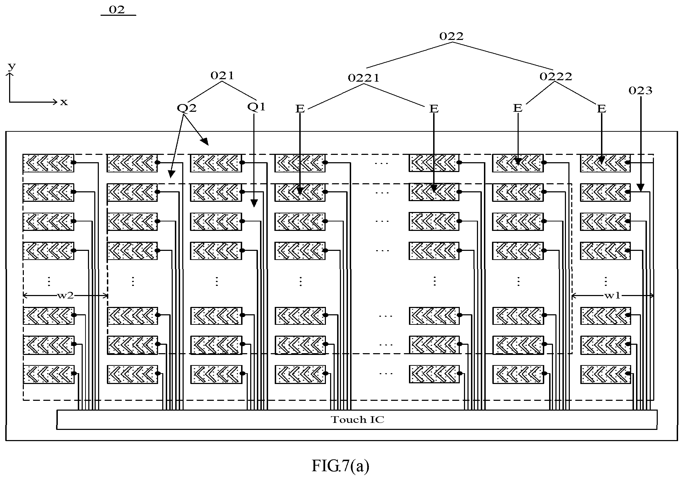

Optionally, please refer to FIG. 7(a), which illustrates a front view of yet another touch display screen 02 provided by the embodiment of the present application and in which the secondary touch sensing pattern of the touch display screen is formed by those touch unit rows and touch unit columns on the periphery of the array of the touch units. The touch sensing pattern 022 is composed of a plurality of touch units E arranged in an array. The plurality of touch units E form a plurality of touch unit rows arranged in the first direction x and a plurality of touch unit columns arranged in the second direction y. Each touch unit E has a pattern, and the pattern on each touch unit column is a periodic pattern. The secondary touch sensing pattern 0222 is composed of two groups of touch units at both ends of each touch unit column and two outermost touch unit columns of the plurality of touch unit columns. The pattern on each group of the two groups of touch units is a pattern of one period of the periodic pattern. The pattern on each touch unit column refers to a pattern composed of patterns on all the touch units E of each touch unit column. It should be noted that FIG. 7(a) illustrates an example that a pattern on each touch unit E is a periodic pattern. Each group of touch units includes one touch unit E at an end of each touch unit column. The two groups of touch units at both ends of the touch unit column are the two touch units E at both ends of each touch unit column. In practical applications, in each touch unit column, the patterns of adjacent k touch units E form a pattern of one period, and k is an integer greater than or equal to 2. In addition, in FIG. 7(a), for convenience of illustration, the distance between the touch units E is set to be relative large. In actual applications, the plurality of touch units E are arranged close to each other, so that the periodic pattern on each touch unit column is more distinct. It should be noted that the pattern on the touch unit E shown in FIG. 7(a) is merely exemplary. In practical applications, the pattern on the touch unit E may be a "caterpillar" pattern or a "fishbone" meshing shape. The pattern of the present application may improve the touch performance of the touch display screen 02 by providing a pattern on the touch units E.

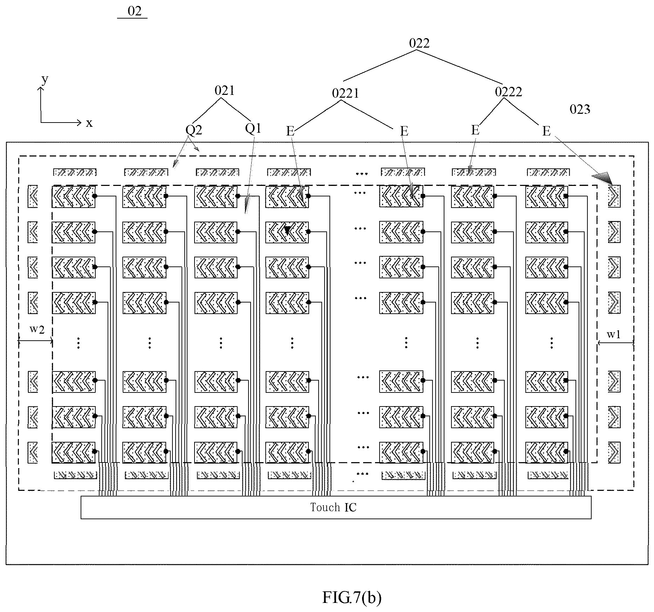

FIG. 7 (b) is a front view of yet another touch display screen provided by an embodiment of the present application, in which the secondary touch sensing pattern of the touch display screen is formed by a portion of touch unit rows and a portion of touch unit columns on the periphery of the array of the touch units. As shown in the Figure, the secondary touch sensing pattern is formed by at least one wire. The secondary touch sensing pattern comprises a longitudinal secondary touch sensing pattern on the left side of the display panel and a longitudinal secondary touch sensing pattern on the right side of the display panel, as well as a lateral secondary touch sensing pattern on the upper side of the display panel and a lateral secondary touch sensing pattern on the lower side of the display panel, the longitudinal secondary touch sensing pattern is formed by at least one wire extending in the vertical direction and adjacent wires in the horizontal direction are electrically connected to each other to form a grid pattern, and the lateral secondary touch sensing pattern is formed by a plurality of wires extending in the horizontal direction.

Optionally, in the embodiment of the present application, the first direction x may be perpendicular to the second direction y. As shown in FIGS. 6 and 7, the first direction x may be a length direction of the display panel 021, and the second direction y may be a width direction of the display panel 021.

In the embodiment of the present application, the width of the secondary touch region of the touch screen display 02 ranges from 50 micrometers to 500 micrometers. The widths of the secondary touch region may include a first width and a second width. The first width may range from 50 micrometers to 500 micrometers, and the second width may range from 50 micrometers to 300 micrometers.

Optionally, further referring to FIG. 6 and FIG. 7, the touch display screen 02 further includes: a plurality of touch sensing lines 023. The plurality of touch sensing lines 023 are connected to the touch units E one by one from a first side of the plurality of touch units E. The first width w1 is a maximum distance between the touch sensing lines 023 located between the first side of the display region Q1 and the first side of the display panel 021, and a boundary line on the first side of the display region Q1. The second width w2 is a maximum distance between the touch units E located between the second side of the display region Q1 and the second side of the display panel 021, and a boundary line on the second side of the display region Q1. The first side of the display region Q1, the first side of the display panel 021, and the first side of the plurality of touch units E are a same side, and the second side of the display region Q1 and the second side of the display panel 021 are a same side. The second side of the display region Q1 is any side of the sides of the display region Q1 other than the first side thereof. Optionally, in the touch display screen 02 shown in FIG. 6 and FIG. 7, the first side is a right side and the second side is a left side. For example, the first side of the display region Q1 is the right side of the display region Q1. The first side of the display panel 021 is the right side of the display panel 021, the first side of any one of the touch units E is the right side of the any one of the touch units E. The second side of the display region Q1 is the left side of the display region Q1. The second side of the display panel 021 is the left side of the display panel 021. It should be noted that the description about the second side in FIGS. 6 and 7 is merely exemplary, and the second side may also be an upper side or a lower side. For example, the second side of the display region Q1 is an upper side of the display region Q1. The second side of the display panel 021 is an upper side of the display panel 021, as long as the second side of the display region Q1 and the second side of the display panel 021 are a same side.

Optionally, in the embodiment of the present application, the plurality of touch sensing lines 023 and the touch sensing patterns 022 may be disposed in a same layer. In addition, in the embodiment of the present application, the touch sensing pattern 022 and the plurality of touch sensing lines 023 are separately described. In some embodiments, the touch sensing lines may be merged into the touch sensing patterns, that is, a plurality of touch units and a plurality of touch sensing lines are combined to form collectively the touch sensing pattern, which is not limited in this embodiment of the present application.

Optionally, in the embodiment of the present application, the touch units E are touch electrodes, the touch sensing lines 023 are touch electrode lines. The touch electrodes may be transparent electrodes formed by a metal oxide such as ITO, Indium Zinc Oxide(referred to as: IZO) or aluminum-doped Zinc Oxide (referred to as: ZnO: Al), and the touch sensing lines 023 may be sensing lines formed by a conductive material such as ITO, IZO, ZnO:Al or metal. The material forming the touch electrodes and the material forming the touch sensing lines may be same or different. When the material forming the touch electrode is the same as the material forming the touch sensing line, the touch electrodes and the touch sensing lines may be formed in one same patterning process. The pattern on each touch unit E may be a slit, and each touch electrode may be a slit electrode. In the embodiment of the present invention, due to the arrangement of the pattern on the touch units E, the sensitivity of the touch point recognition of the touch display screen 02 may be improved such that the touch display screen 02 may perform a better recognizing to the touch point.

Optionally, referring to FIG. 6 and FIG. 7, the touch display screen 02 further includes a touch IC connected to each touch sensing line 023. The touch IC may have a plurality of pins. Each of the touch sensing line 023 may be connected to the touch IC through one pin of the touch IC. The touch IC is used to scan the touch units to obtain the capacitance value at each position where the touch units E are located. When the touch screen 02 is touched, the touch IC determines the touch point according to the change amount of all the capacitance values in the sensing region. The sensing region is a region on the touch display screen 02 that is in contact with a finger or a stylus as well as a region surrounding the contacting region.

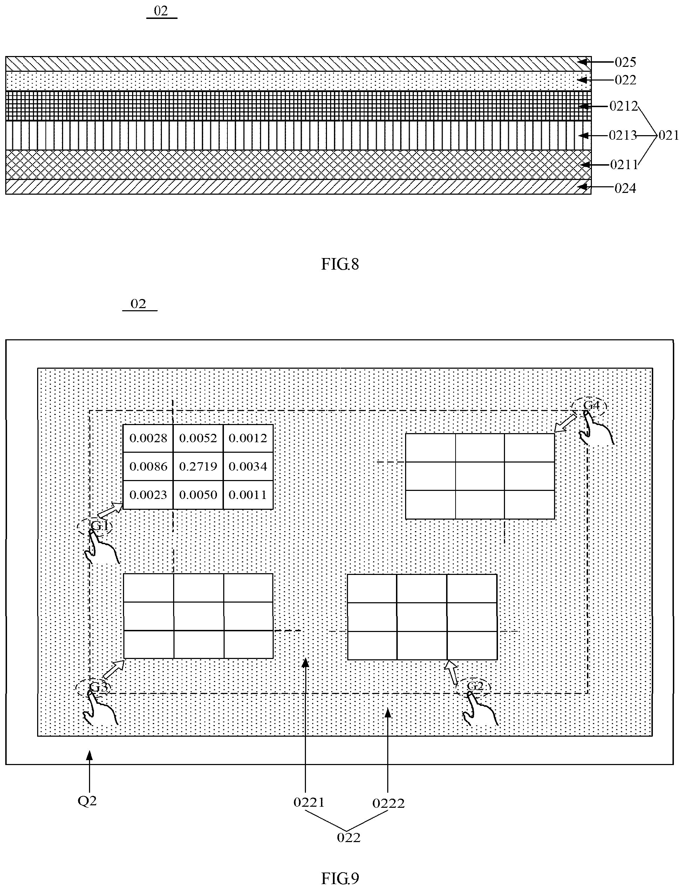

Optionally, the display panel 021 may be a liquid crystal panel or an Organic Light-Emitting Diode (OLED) panel. The embodiment of the present application is described by taking the display panel 021 which is a liquid crystal panel as an example. Please refer to FIG. 8, which is a cross-sectional view of another touch display screen 02 provided by an embodiment of the present application. The display panel 021 includes an array substrate 0211 and a color filter substrate 0212 disposed opposite to each other, and a liquid crystal layer 0213 located between the array substrate 0211 and the color filter substrate 0212. The liquid box formed by the array substrate 0211, the color filter substrate 0212, and the liquid crystal layer 0213 is a display panel 021. The touch sensing pattern 022 is located on a side of the color film substrate 0212 away from the liquid crystal layer 0213. As shown in FIG. 8, the touch display screen 02 further includes: an upper polarizer 024 (at the bottom in FIG. 8) located on a side of the array substrate 0211 away from the liquid crystal layer 0213, and a lower polarizer 025 (at the top in FIG. 8) on a side of the touch sensing pattern 022 away from the color film substrate 0212. The specific structures of the display panel 021, the upper polarizer 024 and the lower polarizer 025, as well as the process of displaying the image by the touch screen display 02 can refer to the related art, and details are not described herein again. It should be noted that FIG. 8 only shows the touch sensing pattern 022, and the touch sensing line 023 are located in a same layer as the touch sensing pattern 022. In addition, the display region and the non-display region of the display panel 021 are not distinguished in FIG. 8. The touch sensing pattern 022 is located in the display region and the non-display region of the display panel 021.

Please refer to FIG. 9, which is a schematic view of determining the touch point by the touch display screen 02 provided by the embodiment of the present application. The corresponding region of the main touch display region 0221 on the touch display screen 02 is the touch display region of the touch display screen 02. When the finger touches the position point G1 or G2 at the edge of the touch display region, the corresponding sensing region includes 9 touch units, and the capacitance values of the positions where the 9 touch units are located change. The 9 touch units in the sensing region includes 6 touch units in the main touch sensing pattern and 3 secondary touch units in the secondary touch sensing pattern that are closest to the 6 touch units, as shown in FIG. 9, in which the touch units in the main touch sending pattern and those in the second touch sending pattern are separated by a dotted line. The touch IC determines the corresponding touch point according to the change amount of the capacitance value of the position where the 9 touch units in each sensing region are located. For example, the change amount of each capacitance value in the sensing region corresponding to the position point G1 is shown in the upper left corner of FIG. 9, and the touch IC determines that the position point at which the change amount of capacitance value of the capacitor corresponds to 0.2719 is the touch point when the position point G1 is touched. When the finger touches the position G3 or G4 near the corner at the edge of the touch display region, the corresponding sensing region also includes 9 touch units, and the capacitance values change at the positions where the 9 touch units are locate. The 9 touch units in each sensing region include the 4 touch units in the main touch sensing pattern and the 5 touch units in the secondary touch sensing pattern that are closest to the 4 touch units, as shown in FIG. 9, in which the touch units in the main touch sending pattern and those in the second touch sending pattern are separated by a dotted line. The touch IC determines the corresponding touch point according to the change amount of the capacitance value of the position where the 9 touch units in each sensing region are located.

The process of determining the touch point by the touch display screen 02 includes: the touch IC scans the touch sensing pattern 022 line by line; when the finger touches the touch display screen 02, respective touch units in the sensing region sense analog touch signals. The analog touch signals sensed by the respective touch units are transmitted to the touch IC through the corresponding touch sensing lines, and the touch IC performs an analog-to-digital conversion (abbreviation: ADC) to each analog touch signal and obtains a digital touch signal, thereby obtaining a plurality of such digital touch signals. Such a digital touch signal can be a capacitance value. The touch IC determines the change amount of the corresponding capacitance value according to the capacitance value of the position of each touch unit in the sensing area as well as the initial capacitance value of the position of each touch unit (that is, the capacitance value of the position of each touch unit when the touch display screen 02 is not touched), and further determines the touch point according to the change amount of the plurality of capacitance values in the sensing region.

Referring to FIG. 6, FIG. 7 and FIG. 9, it can be determined that the line resistance between the touch unit E at the position point G3 and the touch IC is smaller (because the touch sensing line 023 connecting the touch unit E at the position point G3 and the touch IC is relatively shorter), and the line resistance between the touch unit E at the position point G4 and the touch IC is larger (because the touch sensing line 023 connecting the touch unit E at the position point G4 and the touch IC is relatively longer). If the touch display screen 02 does not have the secondary touch sensing pattern 0222 (here the touch display screen is the touch display screen in the related art, the structure of which may refer to FIG. 1 and FIG. 2), the capacitance value of the position of the position point G3 is significantly smaller than other capacitance values in the row where the position point G3 is located, and the capacitance value of the position of the position point G4 is significantly larger than other capacitance values in the row where the position point G4 is located. No matter how the touch IC normalizes the capacitance values of the row where the position point G3 is located, the capacitance values of the row of touch units where the position point G3 is located cannot be uniform. No matter how the touch IC normalizes the capacitance values of the row where the position point G4 is located, the capacitance values of the row of touch units where the position point G4 is located cannot be uniform. Therefore, ghost failures are prone to occur at the position point G3 and the position point G4, thereby resulting a poor stability of the touch function at the edge of the touch display screen, especially at corner points thereof.

In the touch display screen 02 provided by the embodiment of the present application, the touch display screen 02 has a main touch sensing pattern 0221 and a secondary touch sensing pattern 0222, and the touch units at the position G3 further has a secondary touch sensing pattern 0222 on the periphery thereof. The touch IC may perform the normalizing process to the capacitance values of the positions of the touch units in the main touch sensing pattern 0221 and the capacitance values of the positions of the touch units in the secondary touch sensing pattern 0222, in the row of touch units where the position point G3 is located, so that the capacitance values of the row of touch units where the position point G3 is located is uniform, thereby avoiding ghost failure at the position point G3. In the same way, the capacitance values of the row of touch units where the position point G4 is located may be made uniform, and the ghost failure at the position point G4 is avoided. The touch display screen provided by the embodiments of the present application has better stability of the touch performance at the edge of it, especially at the corner point.

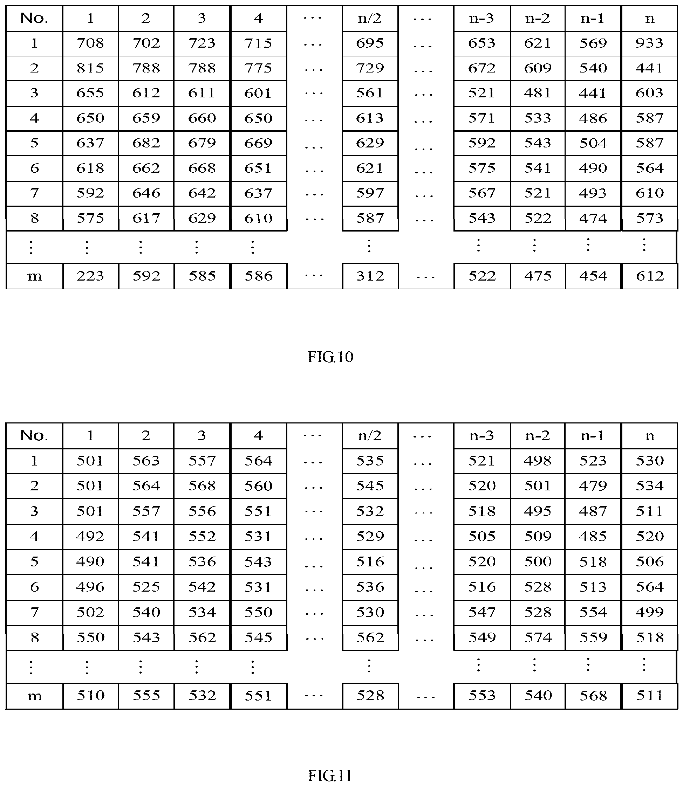

FIG. 10 is a schematic view of capacitance values of respective positions in a touch display screen provided by the related art and FIG. 11 is a schematic view of capacitance values of various positions in a touch display screen provided by the embodiments of the present application, assuming that the touch display region of the touch display screen has m×n touch units, m represents the number of rows of the touch units in the touch display region, and n represents the number of columns of the touch unit in the touch display region, where m and n are both integers greater than 2. The touch unit at the position point G3 is the touch unit (m, 1) in the m-th row and the first column, and the touch unit at the position point G4 is the touch unit (1, n) in the first row and the n-th column. Referring to FIG. 10, in the related art, the capacitance value of the position of the position point G3 is significantly smaller than other capacitance values in the m-th row, and the capacitance value of the position of the position point G4 is significantly larger than other capacitance values in the first row. Therefore, the uniformity of the capacitance values at the first row and the m-th row is relatively poor, and the ghost failure are prone to occur at the position point G3 and the position point G4. Referring to FIG. 11, in the embodiments of the present application, the difference between the capacitance value of the position of the position point G3 and the other capacitance values in the m-th row is small, and the difference between the capacitance value of the position of the position point G4 and the other capacitance values in the first row is also small. Therefore, uniformity of the capacitance values of the first line and the m-th row is relatively good, and the ghost failures are not prone to occur at the position points G3 and G4. In addition, as shown in FIG. 10, in the related art, the capacitance value of the touch unit (m, n/2) in the m-th row and the n/2-th column is significantly smaller than other capacitance values in the m-th row, as shown in FIG. 11. In the embodiment of the present application, the difference between the capacitance value of the touch unit (m, n/2) in the m-th row and the n/2th column and the capacitance values of other touch units in the m-th row is relatively smaller. Comparing the data of FIG. 10 and FIG. 11 , it can be determined that the touch display screen provided by the embodiment of the present application, by setting the secondary touch sensing pattern 0222, is capable of effectively splitting the difference of the capacitance values of the position point G3, the position point G4, and the location points where the touch units (m, n/2) are located, so that the capacitance values of the position points located at the edge of the touch display region are uniform, avoiding the ghost failure of the touch display screen, and improving the yield of the touch display screen.

At present, in the touch display products of the related art, the touch precision of the central region of the touch display region is usually ±1 mm, and the touch precision of the edge of the touch display region is usually ±2 mm, thus the touch precision of the edge of the touch display region is relatively poor, which adversely affects the user's touch experience at the edge of the touch display product. The touch display screen provided by the embodiments of the present disclosure may achieve a touch precision of ±0.538 mm at the edge of the touch display region by setting the secondary touch sensing pattern 0222. The touch precision at the edge of the touch display region is improved, which may improve the user's touch experience satisfaction degree at the edge of the touch display product including the touch display screen 02. In addition, the touch display screen provided by the embodiment of the present invention eliminates the ghost failure at the lower left corner and the upper right corner of the touch display screen by setting the secondary touch sensing pattern 0222, thereby improving the touch yield of the touch display screen. Further, the touch display screen provided by the embodiment of the present application has a touch sensing pattern 022 with a simple structure, and the secondary touch sensing pattern 0222 may be formed together with the main touch sensing pattern 0221 by a same patterning process. Compared with related art, the touch display screen provided by the embodiments of the present application does not need to add any further cost, and does not need to add any further processes at the time of manufacture. The solution provided by the embodiments of the present application may be applied to a twisted nematic (TN) type display product with a high definition of 15.6 inches (referred to as HD), which may effectively satisfy requirements of the touch display product on touch precision.

In summary, in the touch display screen provided by the embodiment of the present application, since the orthographic projection of the touch sensing pattern on the display panel is located in the display region and the non-display region of the display panel, both the touch display region and the non-touch display region of the touch display screen are provided with touch units. When the edge of the touch display region is touched, the sensing region may include the touch units in the touch display region and the touch units in the non-touch display region. The number of touch units in the sensing region is relatively large, and the number of capacitors that may be referenced when determining the touch point is also relatively large, so the touch precision of the touch display screen is relatively high.

The touch display screen provided by the embodiment of the present application may be applied to the following method. The manufacturing method and manufacturing principle of the touch display screen in the embodiments of the present application may be referred to the description in the following embodiments.

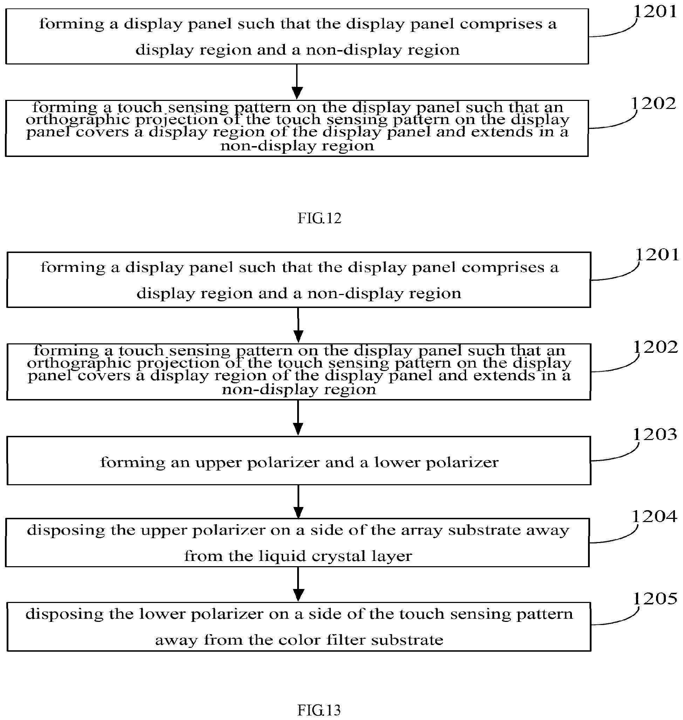

Please refer to FIG. 12, which is a flowchart of a method for manufacturing a touch display screen according to an embodiment of the present application. The method for manufacturing the touch display screen may be used to manufacture the touch display screen 02 provided by the above embodiment. Referring to Figure 12, the method includes the following steps:
In step 1201, forming a display panel such that the display panel comprises a display region and a non-display region

The display panel may be a liquid crystal panel or an OLED panel. As shown in FIGS. 4-7, the display panel 021 has a display region Q1 and a non-display region Q2, and the non-display region Q2 surrounds the display region Q1. As for the process of forming the display panel, refer to the related art, and details are not described herein again.

In step 1202, forming a touch sensing pattern on the display panel such that an orthographic projection of the touch sensing pattern on the display panel covers a display region of the display panel and extends in a non-display region

The material for forming the touch sensing pattern may be ITO, IZO or ZnO:Al. A schematic view of forming a touch sensing pattern on the display panel may be as shown in FIG. 5. The orthographic projection of the touch sensing pattern 022 on the display panel 021 is located in the display region Q1 and the non-display region Q2.

The embodiments of the present application are described with the display panel 021 being a liquid crystal panel. In combination with FIG. 5 and FIG. 8, a layer of ITO is deposited on a side of the color filter substrate 0212 of the display panel 021 away from the liquid crystal layer 0213 by way of coating, magnetron sputtering, thermal evaporation or plasma enhanced chemical vapor deposition(refer to as PECVD) to obtain an ITO material layer. An ITO material layer is obtained and then the ITO material layer is processed by a one-time patterning process to obtain a touch sensing pattern 022. The one-time patterning process includes photoresist coating, exposure, development, etching, and photoresist peeling. Therefore, the ITO material layer being processed by a one-time patterning process to obtain a touch sensing pattern 022, includes: applying a layer of photoresist on the ITO material layer to obtain a photoresist layer, exposing the photoresist layer with a mask to form a fully exposed region and a non-exposed region, and then processing with a development process to completely remove the photoresist in the fully exposed region, and to completely retain the photoresist in the non-exposed region. The region corresponding to the completely exposed region on the ITO material layer is etched by an etching process, and finally the photoresist in the non-exposed region is peeled off, and the retained ITO pattern on the display panel 021 is the touch sensing pattern 022. It should be noted that the embodiments of the present application is described taking the case in which the touch sensing pattern 022 is formed by using a positive photoresist as example. It is possible that the touch sensing pattern 022 is formed by using a negative photoresist, which may not be limited in the embodiments of the present application.

As shown in FIG. 8, when the display panel 021 is a liquid crystal panel, the touch display screen 02 further includes an upper polarizer 024 located on a side of the array substrate 0211 away from the liquid crystal layer 0213, and a lower polarizer 025 located on a side of the touch sensing pattern 022 away from the color filter substrate 0212. Based on this, please refer to FIG. 13, which is a flowchart of a method for manufacturing another touch display screen according to an embodiment of the present application. Based on FIG. 12, the method for manufacturing the touch display screen further includes the following steps:
In step 1203, forming an upper polarizer and a lower polarizer
In step 1204, disposing the upper polarizer on a side of the array substrate away from the liquid crystal layer

Optionally, the upper polarizer 024 may be attached onto the side of the array substrate 0211 away from the liquid crystal layer 0213 by an attaching process, so that the upper polarizer 024 is located on the side of the array substrate 0211 away from the liquid crystal layer 0213.

In step 1205, disposing the lower polarizer on a side of the touch sensing pattern away from the color filter substrate

Optionally, the lower polarizer 025 may be attached to the side of the touch sensing pattern 022 away from the color filter substrate 0213 by the attaching process, so that the lower polarizer 025 is located on the side of the touch sensing pattern 022 away from the color filter substrate 0213.

In summary, in the method for manufacturing the touch display screen provided by the embodiments of the present application, since the orthographic projection of the touch sensing pattern on the display panel is located in the display region and the non-display region of the display panel, there are touch units both in the touch display region and the non-touch display region. When the edge of the touch region is touched, the sensing region may include the touch units in the touch display region and the touch units in the non-touch display region. The number of touch units in the sensing region is relatively large, and the number of capacitors that can be referenced when determining the touch point is also relatively large, thereby the touch precision of the touch display screen being relatively high. Further, the main touch sensing pattern and the secondary touch sensing pattern are formed by a same one-time patterning process. Therefore, compared with the related art, the manufacturing process of the touch display screen provided by the embodiments of the present application does not need to add further process, and does not add any further cost.

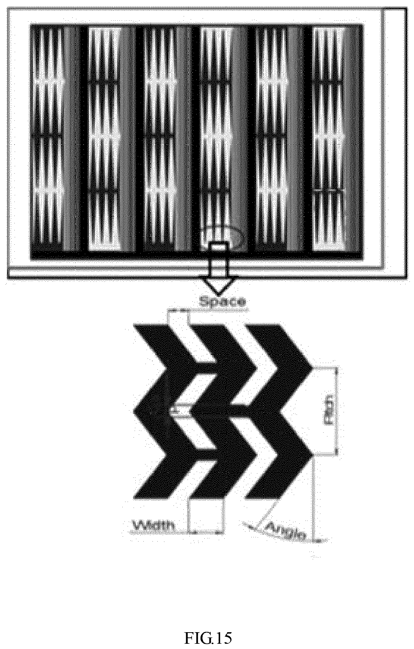

FIG. 15 is a touch sensing pattern of a touch display screen according to an embodiment of the present application. The pattern is a grid pattern and those touch units engaged with each other via the fishbone shape are shown in detail. As shown in FIG. 15, the touch sensing pattern comprises a grid pattern with a uniform density. The touch units are in a shape of a fishbone, and adjacent touch units in the horizontal direction are engaged with each other via the fishbone shapes, so that the touch sensing pattern has a uniform density in general. The touch sensing line has a same grid pattern as that of the touch sensing pattern. The touch sensing line and the touch sensing pattern together form a planar pattern with a uniform density.

The above embodiments further provide a touch display device including the touch display screen 02. Such a touch display device may be a smart phone, a tablet computer, a smart on-board terminal, a smart bracelet/wristband, smart watch, touch display, laptop, digital photo frame, navigator or any products or component with a touch display function.

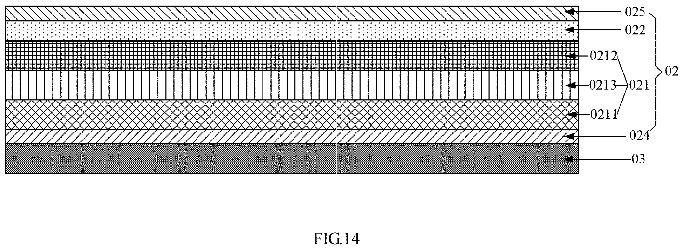

As being illustrated in the above embodiment, the touch display screen 02 includes a display panel 021. The embodiment of the present application is described by taking the case where the display panel 021 is a liquid crystal panel as an example. Referring to FIG. 14, which is a cross-sectional view of a touch display device according to an embodiment of the present application. The touch display device includes a touch display screen 02 provided in the above embodiments and a backlight module 03. The display panel 021 in the touch display screen 02 is a liquid crystal panel, and the backlight module 03 is disposed on a side of the upper polarizer 024 of the touch display screen 02 away from the array substrate 0211. The backlight module 03 may be a side-lit backlight module or a direct-lit backlight module. The structure of the touch screen display 02 may refer to the foregoing embodiments. The structure of the backlight module 03 may be referred to the related art, and details are not described herein again.

In summary, in the touch display device provided by the embodiments of the present application, since in the touch display screen, the orthographic projection of the touch sensing pattern on the display panel is located in the display region and the non-display region of the display panel, there are touch units both in the touch display region and in the non-touch display region of the touch display screen. When the edge of the touch display region is touched, the sensing region may contain touch units in the touch display region and touch units in the non-touch display region. Therefore, the number of touch units in the sensing region is relatively large, and the number of capacitors that can be referenced when determining the touch point is also relatively large, thereby the touch precision of the touch display screen is relatively high.

A person skilled in the art may appreciate that all or part of the steps of implementing the above embodiments may be finished by hardware, or may be finished through a program to execute related hardware, and the program may be stored in a computer readable storage medium. The storage medium mentioned above may be a read only memory, a magnetic disk, an optical disk or the like.

The above description is only an optional embodiment of the present application, and is not intended to limit the present application. Any modifications, equivalent replacements, improvements, etc. made within the spirit and principles of the present application are included in the protective scope of the present application.

## Claims

1. A touch display screen (01) comprising:
a display panel (011), and
a touch sensing pattern (012; 022) disposed on the display panel (011),
wherein an orthographic projection of the touch sensing pattern (012; 022) on the display panel (011) covers a display region (A1) of the display panel (011) and extends into a non-display region (A2).

2. The touch display screen (01) according to claim 1, wherein the touch sensing pattern (022) comprises a main touch sensing pattern (0221) and a secondary touch sensing pattern (0222), and an orthographic projection of the main touch sensing pattern (0221) on the display panel (011) is within the display region (A1), and an orthographic projection of the secondary touch sensing pattern (0222) on the display panel (011) is extended from the display region (A1) to the non-display region (A2) at least partially.

3. The touch display screen (01) according to claim 1, wherein the touch sensing pattern (022) comprises a main touch sensing pattern (0221) and a secondary touch sensing pattern (0222), and an orthographic projection of a line connecting vertices of a boundary of the main touch sensing pattern (0221) on the display panel (011) coincides with a boundary of the display region (A1), and the secondary touch sensing pattern (0222) surrounds the main touch sensing pattern (0221).

4. The touch display screen (01) according to claim 2 or 3, wherein the touch sensing pattern (012; 022) comprises a plurality of touch units (E) arranged in an array, and the plurality of touch units (E) form a plurality of touch unit rows arranged in a first direction and a plurality of touch unit columns arranged in a second direction, wherein the secondary touch sensing pattern (0222) comprises two touch unit rows formed by the touch units at both ends of each touch unit column and the outermost touch unit columns of the plurality of touch unit columns.

5. The touch display screen (01) according to claim 4, wherein each touch unit (E) has a periodic pattern, and the patterns on each touch unit column form a periodic pattern, and the patterns on each touch unit row form a periodic pattern.

6. The touch display screen (01) according to any one of claims 2-5, wherein the secondary touch pattern of the touch display screen (01) has a width ranging from 50 micrometers to 500 micrometers.

7. The touch display screen (01) according to claim 6, wherein the touch display screen (01) further comprises: a plurality of touch sensing lines (023), and the plurality of touch sensing lines (023) are connected to the plurality of touch units (E) one by one on a first side of the plurality of touch units (E),
the secondary touch region has widths including a first width and a second width, the first width ranges from 50 micrometers to 500 micrometers, and the second width ranges from 50 micrometers to 300 micrometers;
the first width is a maximum distance between the touch sensing lines (023) located between the first side of the display region (A1) and the first side of the display panel (011), and a boundary line of the first side of the display region (A1); and the second width is a maximum distance between the boundary line of the second side of the touch units (E) located between the second side of the display region (A1) and the second side of the display panel (011), and a boundary line of the second side of the display region (A1), wherein the first side of the display region (A1), the first side of the display panel (011), and the first side of the plurality of touch units are a same side, and the second side of the display region (A1) and the second side of the display panel (011) are a same side, the second side of the display region (A1) is any one of the sides of the display region (A1) other than the first side.

8. The touch display screen (01) according to claim 7, wherein the touch units (E) are touch electrodes, and the touch sensing lines (023) are touch electrode lines.

9. The touch display screen (01) according to claim 4, wherein the touch sensing pattern comprises a grid pattern.

10. The touch display screen (01) according to claim 9, wherein the grid pattern has a uniform density.

11. The touch display screen (01) according to claim 10, wherein the touch unit is in a shape of a fishbone, and adjacent touch units in the second direction are engaged with each other via the fishbone shape, so that the touch sensing pattern has a uniform density in general.

12. The touch display screen (01) according to claim 11, wherein the touch sensing line has a same grid pattern as that of the touch sensing pattern, and the touch sensing line and the touch sensing pattern together form a planar pattern with a uniform density.

13. The touch display screen (01) according to claim 12, wherein the secondary touch sensing pattern is formed by at least one wire.

14. The touch display screen (01) according to claim 13, wherein the secondary touch sensing pattern comprises a longitudinal secondary touch sensing pattern on a first side of the display panel (011) and a longitudinal secondary touch sensing pattern on a second side of the display panel (011), as well as a lateral secondary touch sensing pattern on a third side of the display panel (011) and a lateral secondary touch sensing pattern on a fourth side of the display panel (011), wherein the longitudinal secondary touch sensing pattern is formed by at least one wire extending in the second direction and adjacent wires in the first direction are electrically connected to each other to form a grid pattern, and wherein the lateral secondary touch sensing pattern is formed by a plurality of wires extending in the second direction.

15. A touch display device, comprising the touch display screen (01) according to any one of claims 1-14.
